# EUROPEAN PATENT APPLICATION

(11) **EP 4 793 008 A1**
(43) Date of publication of application: **19.08.2026**
(21) Application number: 25202132.4
(22) Date of filing: 15.09.2025
(51) Int. Cl.: B26F 1/40, B21D 28/02, B21D 37/10, B21D 37/12, B26F 1/44, H01M 4/04

(54) **NOTCHING MOLD AND METHOD FOR NOTCHING AN ELECTRODE PLATE**

(30) Priority: 14.02.2025 KR 20250019171
(71) Applicant: SAMSUNG SDI CO., LTD., Yongin-si, Gyeonggi-do 17084 (KR)
(72) Inventor: LEE, Jae Wook, 17084 Yongin-si, Gyeonggi-do, (KR); SONG, Sung Sub, 17084 Yongin-si, Gyeonggi-do, (KR); JEON, Hong Woo, 17084 Yongin-si, Gyeonggi-do, (KR)
(74) Representative: Gulde & Partner

(57) **Abstract**

A notching mold (10) comprises a lower plate(110); an upper plate (120) disposed above the lower plate (110); a die plate (410) disposed on the lower plate (120) and supporting a die (420); the die (420); a punch plate (510) between the upper plate (120) and the die plate (410); a punch pusher (530) between the upper plate (120) and the die plate (410); a punch (520) below the punch plate (510) and the punch pusher (530) and above the die plate (410); and a guide post (700) connected to the die plate (410) and the punch (520), wherein the die (420) comprises an opening (OP), wherein the punch (520) is coupled with the punch plate (510), wherein the punch (520) comprises a first region (1A) configured to be inserted into the opening (OP) and a second region (2A) disposed outside the opening (OP), and wherein the guide post (700) is configured to guide movement of the punch (520).

## Description

### BACKGROUND

### 1. Field

Embodiments of the present disclosure relate to a notching mold and a method for notching an electrode plate.

### 2. Description of the Related Art

While primary batteries are not designed to be (re)charged, secondary (also known as rechargeable) batteries are batteries that are designed to be discharged and recharged. Among secondary batteries, low-capacity secondary batteries are widely used in portable, small electronic devices, such as smart phones, feature phones, notebook computers, digital cameras, and camcorders, while high-capacity secondary batteries are widely used as power sources for driving motors in hybrid vehicles and electric vehicles, as well as for storing power (e.g., home and/or utility scale power storage). A secondary battery generally includes an electrode assembly including a positive electrode and a negative electrode, a case accommodating both electrodes, and electrode terminals connected to the electrode assembly.

This Background section is for the general understanding of the background of the present disclosure, and therefore, it may contain information that does not constitute related (or prior) art.

### SUMMARY

Embodiments of the present disclosure provide a notching mold having improved clearance.

Embodiments of the present disclosure provide a method for notching an electrode plate capable of manufacturing a secondary battery having improved safety.

Embodiments of the present disclosure provide a notching mold according to an embodiment comprise a lower plate; an upper plate on the lower plate; a die plate disposed on the lower plate and supporting a die; a punch plate, a punch pusher, and a punch between the upper plate and the die plate; and a guide post connected to the die plate and the punch, the die comprises an opening, the punch is coupled with the punch plate, the punch comprises a first region inserted into the opening and a second region disposed outside the opening, and the guide post guides the movement of the punch.

Embodiments of the present disclosure provide a notching mold comprising: a lower plate; an upper plate disposed above the lower plate; a die plate disposed on the lower plate and supporting a die; the die; a punch plate between the upper plate and the die plate; a punch pusher between the upper plate and the die plate; a punch below the punch plate and the punch pusher and above the die plate; and a guide post connected to the die plate and the punch, wherein the die comprises an opening, wherein the punch is coupled with the punch plate, wherein the punch comprises a first region configured to be inserted into the opening and a second region disposed outside the opening, and wherein the guide post is configured to guide movement of the punch.

In some embodiments, the guide post may comprise 1 to 4 posts disposed in one punch.

In some embodiments, a number of the guide post that may be disposed in one punch is 1 to 4.

In some embodiments, the notching mold may further comprise a stripper disposed between the lower plate and the upper plate; may further comprise a main post connected to the lower plate and the upper plate; and may even further comprise an inner post connected to the stripper and the die plate.

In some embodiments, the punch pusher may be connected to the punch plate and the upper plate.

In some embodiments, when the upper plate moves downward, the punch pusher may move downward, and the punch plate and the punch may move downward by the movement of the punch pusher.

In some embodiments, upon the upper plate moving downward, the punch pusher may be configured to move downward, and the punch plate and the punch may move downward via the punch pusher.

In some embodiments, the movement of the upper plate may be guided by the main post.

In some embodiments, the main post may be configured to guide movement of the upper plate.

In some embodiments, the stripper may move downward, and the movement of the upper plate may be guided by the main post.

In some embodiments, the inner post may be configured to guide movement of the stripper.

In some embodiments, the second region may overlap a portion of the electrode plate on the die.

In some embodiments, the second region may overlap a portion of an electrode plate configured to be placed on the die.

In some embodiments, the notching mold may further comprise an elastic member coupled to the guide post.

Embodiments of the present disclosure provide a method for notching an electrode plate according to an embodiment comprises an electrode plate is disposed on a die including an opening, a punch moves, and the electrode plate is cut by the punch, the punch is moved by the movement of an upper plate, and the upper plate and the punch are guided by different posts.

Embodiments of the present disclosure provide a method for notching an electrode plate using a notching mold, comprising: disposing an electrode plate on a die, the die comprising an opening; moving a punch; and cutting the electrode plate by the punch, wherein the punch is driven by movement of an upper plate, and wherein the movement of the upper plate and movement of the punch are guided by different posts.

In some embodiments, a lower plate may be disposed under the upper plate, the die may be supported by a die plate, the upper plate may be guided by a main post, the punch may be guided by a guide post, the main post may be connected to the lower plate and the upper plate, and the guide post may be connected to the die plate and the punch.

In some embodiments, a lower plate may be disposed below the upper plate, wherein the die may be supported by a die plate disposed on the lower plate, wherein the upper plate may be guided by a main post connected to the lower plate and the upper plate, and wherein the punch may be guided by a guide post connected to the die plate and the punch.

In some embodiments, the electrode plate may comprise a cutting region overlapping the opening.

In some embodiments, the punch may move downward from a first position.

In some embodiments, the punch may move in the opening.

In some embodiments, a portion of the punch may move into the opening.

In some embodiments, the punch may comprise a first region positioned in the opening and may comprise a second region positioned outside the opening, and the first region may move in the opening.

In some embodiments, the punch may comprise a first region positioned to be inserted into the opening and a second region positioned outside the opening.

In some embodiments, the second region may overlap the cutting region.

In some embodiments, the punch may move from the first position to a second position located below the first position, and the cutting region may be cut while the second region and the cutting region come into contact by the movement of the punch.

In some embodiments, the punch may move to a second position, and wherein the cutting region may be cut when the second region and the cutting region come into contact via the punch.

In some embodiments, a distance between one end of the punch and the die at the second position may be about 0 µm to about 2 µm.

In some embodiments, a distance between an end of the punch proximate to the die and the die at the second position may be about 0 µm to about 2 µm.

In some embodiments, the method for notching an electrode plate may further comprise an elastic member coupled to the guide post, the punch may not contact the elastic member at the first position, and the punch may contact the elastic member at the second position.

In some embodiments, the punch may move from the second position to the first position by the elastic member.

In some embodiments, the punch may move from the second position to the first position via restorative force of the elastic member.

All embodiments described in this specification may be advantageously combined with one another to the extent that their respective features are compatible. In particular, the expressions "according to an embodiment," "in an embodiment," "an embodiment of the invention provides" etc. mean that the respective features may or may not be part of specific embodiments of the present invention.

### BRIEF DESCRIPTION OF THE DRAWINGS

The drawings illustrate embodiments of the present disclosure, and further describe aspects and features of the present disclosure along with the detailed description of the present disclosure. Thus, the present disclosure should not be construed as being limited to the drawings.
FIG. 1 is a side view showing a notching mold according to embodiments of the present disclosure.
FIG. 2 is a side view showing a notching mold according to embodiments of the present disclosure.
FIG. 3 is a top view of the notching mold according to embodiments of the present disclosure.
FIG. 4 is a cross-sectional view taken along the A-A' section of FIG. 3 according to embodiments of the present disclosure.
FIG. 5 is a cross-sectional view taken along the A-A' section of FIG. 3 according to embodiments of the present disclosure.
FIG. 6 shows a secondary battery manufactured using the notching mold according to embodiments of the present disclosure.
FIG. 7 shows a secondary battery manufactured using the notching mold according to embodiments of the present disclosure.
FIG. 8 shows a secondary battery manufactured using the notching mold according to embodiments of the present disclosure.
FIG. 9 is a perspective view showing a battery module and a battery pack including secondary batteries according to embodiments of the present disclosure.
FIG. 10 is a perspective view showing a battery module and a battery pack including secondary batteries according to embodiments of the present disclosure.
FIG. 11 is a perspective view showing a vehicle including battery packs according to embodiments of the present disclosure.
FIG. 12 is a side view showing a vehicle including battery packs according to embodiments of the present disclosure.

### DETAILED DESCRIPTION

Embodiments of the present disclosure are described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the technical spirit, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

A reference to two objects in comparison being the same means that they are substantially the same. Thus, the wording "substantially the same" may include cases where the same is considered to be a low level in the related art, for example, a deviation within 5%. In addition, when any of parameters is referred to as being uniform in a given region, it may mean that the parameter is uniform from an average perspective.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The arrangement of an arbitrary component on the "upper portion (or lower portion)" or "upper (or lower)" of a component means that an arbitrary component is placed in contact with the upper (or lower) surface of the component. In addition, it may mean that other components may be interposed between the component and any component disposed on (or under) the component.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any subrange subsumed within the ranges expressly recited herein. All such ranges are intended to be inherently described in this specification such that amending to expressly recite any such subranges would comply with the requirements of 35 U.S.C. § 112(a) and 35 U.S.C. § 132(a).

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

As used herein, a vertical direction of the notching mold means the thickness direction of the upper plate and the lower plate.

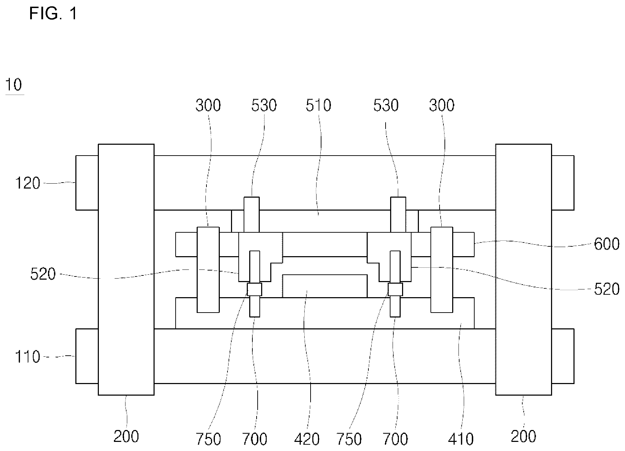

A notching mold 10 is described with reference to FIGS. 1 to 5.

Referring to FIGS. 1 to 5, the notching mold 10 may include a lower plate 110, an upper plate 120, a main post 200, an inner post 300, a die plate 410, a die 420, a punch plate 510, a punch 520, a punch pusher 530, a stripper 600, and a guide post 700.

The lower plate 110 and the upper plate 120 may form the outer shape of the notching mold. The lower plate 110 is disposed at the bottom of the notching mold. The lower plate 110 may support the die plate 410 and the die 420. The lower plate 110 may be formed in a flat plate geometry having a predetermined thickness.

The upper plate 120 is disposed at the upper of the notching mold. The die plate 410, the die 420, the punch plate 510, the punch 520, the punch pusher 530, and the stripper 600 may be disposed between the lower plate 110 and the upper plate 120. The upper plate 120 may be formed in a flat plate geometry having a predetermined thickness.

The main post 200 is inserted into the lower plate 110 and the upper plate 120. The lower plate and the upper plate each include a hole. The hole of the lower plate and the hole of the upper plate may overlap in the vertical direction of the notching mold. The vertical direction may be the thickness direction of the lower plate 110 and the upper plate 120.

The main post 200 is inserted into the hole of the lower plate and the hole of the upper plate and is coupled. Accordingly, the lower plate 110 and the upper plate 120 may be connected via the main post 200.

The main post 200 may include a plurality of posts. For example, the main posts may be disposed at each corner of the lower plate 110 and the upper plate 120. For example, the main post 200 may include four posts.

The die plate 410 and the die 420 are disposed on the lower plate 110. The die plate 410 may be supported by the lower plate 110. The die 420 may be supported by the die plate 410.

An electrode plate (not shown) is disposed on the die 420. The electrode plate may be cut into a desired geometry by the punch 520.

The die 420 includes an opening.

The punch plate 510, the punch 520, and the punch pusher 530 may be disposed on the die plate 410 and the die 420. The punch plate 510, the punch 520, and the punch pusher 530 may be disposed between the upper plate 120 and the die plate 410.

The punch plate 510 and the punch 520 are coupled or connected. The punch plate 510 and the punch pusher 530 are coupled or connected. The punch pusher 530 is coupled with the upper plate 120.

The punch 520 moves in the vertical direction by the punch plate 510 and the punch pusher 530. The punch plate 510 receives force in one direction by the punch pusher 530. The punch plate 510 moves in one direction by the force. Accordingly, the punch 520 coupled with the punch plate 510 moves in one direction.

The punch 520 may have various geometries. For example, the punch plate 510 receives a force in one direction by the punch pusher 530. The punch plate 510 moves in one direction by the force. Accordingly, the punch 520 coupled to the punch plate 510 moves in one direction.

The punch 520 may be inserted into the opening of the die by the punch pusher 530.

The stripper 600 is disposed on the die 420. The stripper 600 may move. The stripper 600 may move in a vertical direction. The stripper may fix the electrode plate. The stripper 600 may move in a downward direction to contact the electrode plate. Subsequently, the electrode plate is cut by the punch 520. Accordingly, generation of waste materials during cutting of the electrode plate may be minimized.

The inner post 300 is inserted into the die plate 410 and the stripper 600. Each of the die plate and the stripper includes a hole. The hole of the die plate and the hole of the stripper may overlap in a vertical direction of the notching mold.

The inner post 300 is inserted into and coupled to the hole of the die plate and the hole of the stripper. Accordingly, the die plate 410 and the stripper 600 may be connected to each other by the inner post 300.

The movement of the stripper may be guided by the inner post 300.

The inner post 300 may include a plurality of posts. For example, the inner post may be disposed at corners of the die plate 410 and the stripper 600, respectively. For example, the inner post 300 may include four posts.

The guide post 700 is inserted into the die plate 410 and the punch 520. Each of the die plate and the punch includes a hole. The hole of the die plate and the hole of the punch may overlap in the vertical direction of the notching mold.

The guide post 700 is inserted into and coupled to the hole of the die plate and the hole of the punch. Accordingly, the die plate 410 and the punch 520 may be connected to each other via the guide post 700.

The movement of the punch may be guided by the guide post 700.

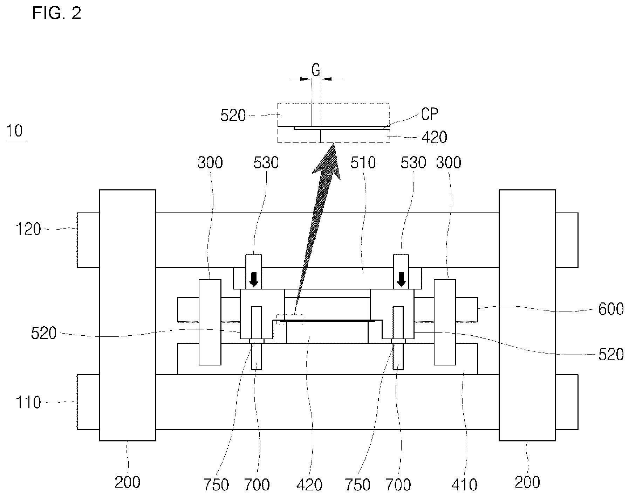

Referring to FIGS. 1 and 2, the electrode plate is cut by the movement of the punch. FIG. 1 is a view in which the punch is located at a first position, and FIG. 2 is a view in which the punch is located at a second position.

Referring to FIGS. 1 and 2, the punch 520 moves vertically. The punch pusher 530 moves downward. The upper plate 120 moves downward, and the punch pusher 530 coupled to the upper plate 120 also moves downward. The movement of the upper plate 120 may be guided by the main post 200.

The punch pusher 530 may be moved and may be in contact with the punch plate 510. Subsequently, the punch pusher 530 may transmit force to the punch plate 510. The punch plate 510 may move downward by the force. Accordingly, the punch 520 coupled to the punch plate 510 moves downward.

The electrode plate CP on the die and the punch 520 may contact each other. Accordingly, the electrode plate CP may be cut into a geometry set by the punch 520.

The electrode plate may be cut in various geometries depending on the position of the punch 520. For example, a gap G may be formed between one end of the punch 520 and one end of the die 420. The gap G may be a distance between an end of the punch 520 proximate to the die 420 and the die 420 when the punch 520 is at the second position. The gap G should be maintained at about 0 µm to about 2 µm for precise cutting of the electrode plate CP. When the gap G is about 0 µm, one end of the punch 520 and one end of the die 420 are in contact with each other. A clearance of the notching mold 10 is defined as the size of the gap. When the size of the gap G exceeds about 2 µm, the electrode plate CP is cut to a size different from (e.g., be smaller than) a desired size. Therefore, safety of a secondary battery manufactured by using the electrode plate CP may be reduced. For example, in the secondary battery, a short circuit between a positive electrode and a negative electrode may occur due to a decrease in the accuracy of cutting of the electrode plate CP.

Conventionally, the punch is coupled to the upper plate. Accordingly, the punch is moved by the movement of the upper plate. As the movement of the upper plate is guided by the main post, the main post may be worn by the repeated movement of the upper plate. Accordingly, the upper plate may be misaligned. Resultingly, the punch, moving due to the movement of the upper plate, may be misaligned.

The clearance of the notching mold may be changed where the size of the gap may be increased. Accordingly, the accuracy of cutting of the electrode plate may be reduced.

On the other hand, the notching mold 10 includes the punch 520 coupled to the punch plate 510. The punch 520 is inserted into an opening OP which is a hole formed in the die 420. The punch 520 is moved downward by a force applied from a punch pusher 530 in a state of being inserted into the opening OP of the die 420. Therefore, the alignment of the punch 520 is not affected by wear of the main post 200, improving the clearance of the notching mold 10. That is, the size of the gap G may be maintained at about 0 µm to about 2 µm.

The punch 520 is guided by the guide post 700. Accordingly, the punch 520 may move in the vertical direction at the predetermined position.

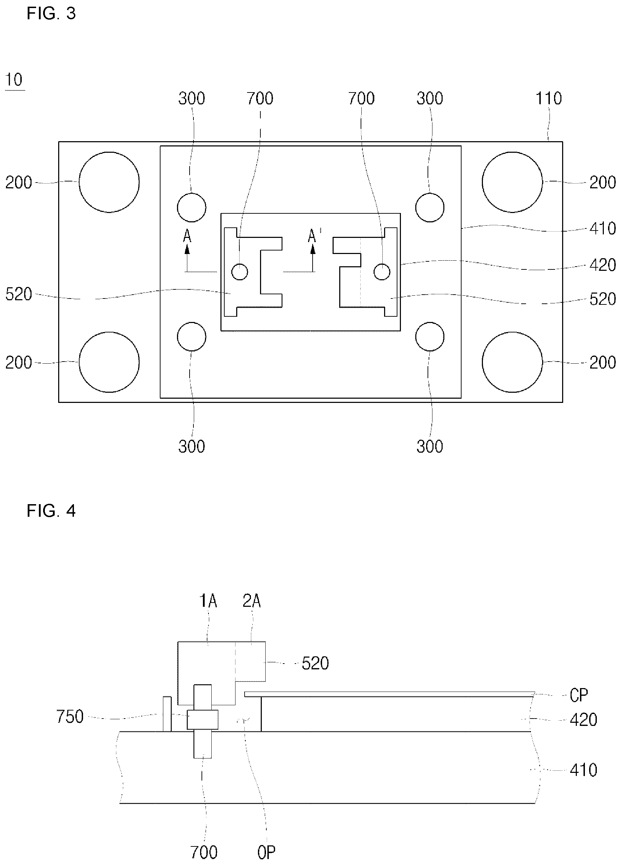

Referring to FIGS. 3 and 4, the die 420 includes an opening OP. The punch 520 is inserted into the opening OP. The punch 520 may be inserted into the opening OP at a first position. The first position is a position before the movement of the punch 520.

The punch 520 may include a first region 1A and a second region 2A. The first region 1A and the second region 2A may be formed as a single piece.

The first region 1A may be inserted into the opening OP. The guide post 700 may be coupled to the first region 1A and the die plate 410. The second region 2A may be disposed outside the opening OP. The second region 2A may vertically overlap a portion of the electrode plate CP. The region of the electrode plate CP overlapping the second region 2A may be a region cut by the punch 520.

The guide post 700 may be disposed in the opening OP. The guide post 700 may be connected to the first region 1A and the die plate 410 in the opening OP.

The guide post 700 may include at least one post. For example, the guide post 700 may include 1 to 4 posts. 1 to 4 guide posts may be disposed in the one punch. The number of guide posts 700 may be set in consideration of the movement of the punch 520 and the size of the opening OP.

An elastic member 750 may be disposed on the guide post 700 or coupled to the guide post 700. The elastic member 750 may surround an outer circumferential surface of the guide post 700. For example, the elastic member 750 may include a spring.

The punch 520 may not be in contact with the elastic member 750 at the first position.

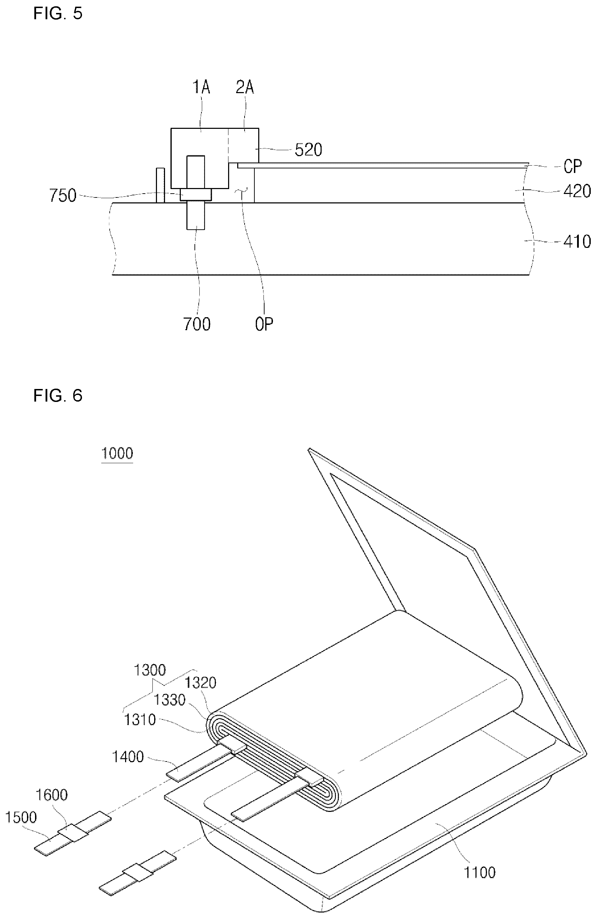

Referring to FIGS. 3 and 5, the force may be transferred to the punch 520. The force may be transferred to the punch plate 510 via the punch pusher 530. Accordingly, the punch 520 may move downward.

The stripper 600 may move first before the punch 520 moves. The stripper 600 may move downward to contact the electrode plate CP. Accordingly, the electrode plate CP may be fixed by the stripper 600.

The first region 1A may be moved downward by the force. The first region 1A may be guided by the guide post 700.

The first region 1A may come in contact with the elastic member 750. The elastic member 750 may be compressed while the first region 1A moves downward. When the punch 520 moves downward, the first region 1A may not come in contact with the die plate 410 due to existence of the elastic member 750. Therefore, damage to the punch 520 or the die plate 410 may be prevented.

The second region 2A may be moved downward by the force. The second region 2A may move together with the first region 1A. The second region 2A may be in contact with the electrode plate CP. Accordingly, a portion of the electrode plate CP may be cut by the punch 520. After cutting the electrode plate CP, the second region 2A may be positioned outside the opening OP or inserted into the opening OP depending on the magnitude of the force.

Accordingly, the punch 520 may move from the first position to the second position. After the cutting of the electrode plate CP is completed, the punch 520 may move back to the first position via restoration force of the elastic member 750.

The punch 520 is inserted into the opening of the die 420 at the first position and the second position. That is, the punch 520 may move in the vertical direction while being inserted into the opening OP.

The punch 520 is guided by the guide post 700. Therefore, the clearance of the punch 520 may be maintained in a predetermined range.

The punch 520 is coupled to the punch plate 510 and moved by the punch pusher 530. The alignment of the upper plate 120 may be shifted by wear of the main post 200. However, the punch 520 is moved by the punch plate 510 and the punch pusher 530. Therefore, the alignment of the punch 520 is not affected by the alignment of the upper plate 120. That is, the punch 520 is moved (e.g., driven) by the movement of the upper plate 120, but the alignment of the punch 520 is not affected by the alignment of the upper plate 120. Accordingly, the clearance of the punch 520 may be maintained in a predetermined range.

Accordingly, the notching mold 10 may have improved clearance. The notching mold 10 may maintain improved clearance even when repeatedly used. Accordingly, the accuracy of cutting of the electrode plate CP cut by the notching mold 10 may be improved. Accordingly, safety of the secondary battery manufactured by the electrode plate CP may be improved.

The notching mold 10 may be used to manufacture the secondary battery. The notching mold 10 may be used to notch the electrode plate CP. For example, the notching mold 10 may be used to notch the current collector.

The method for notching an electrode plate is described with reference to FIGS. 1 to 5.

The method for notching an electrode plate may include disposing the electrode plate CP on the die 420, moving the punch 520, and cutting the electrode plate CP by the punch 520. These steps may be sequentially performed.

The electrode plate CP may be disposed on the die 420. The electrode plate CP may include a conductive material. For example, the electrode plate CP may include a metal. For example, the electrode plate CP may include aluminum, copper, or nickel. The electrode plate may be the current collector of the secondary battery. The die 420 may include the opening OP. The electrode plate CP may include a cutting region. The cutting region may overlap the opening OP.

The punch (520) moves downward from the first position. The punch 520 may be moved by the punch pusher 530. The punch pusher 530 may be moved downward by the upper plate 120. The upper plate 120 may move while being guided by the main post 200. Accordingly, the punch pusher 530 coupled to the upper plate 120 may be moved downward. While the punch pusher 530 moves downward, the punch plate 510 transmits the force in a downward direction to the punch plate 510. Accordingly, the punch plate 510 may be moved downward. Accordingly, the punch 520 coupled to the punch plate 510 may be moved downward of the first position. The first position may be located in the opening OP. That is, the punch 520 may move in the opening OP. A portion of the punch 520 may move in the opening OP. The movement of the punch 520 may be guided. The movement of the punch 520 may be guided by the guide post 700. That is, the upper plate 120 and the punch 520 are guided by different posts.

The cutting region of the electrode plate may be cut.

The punch 520 may include the first region 1A and the second region 2A. The first region 1A is located in the opening OP, and the second region 2A is located outside the opening OP. The second region 2A may overlap a portion of the electrode plate. The second region 2A may overlap the cutting region.

The punch 520 moves from the first position to a second position located below the first position. The cutting region may be cut by the movement of the punch. The first region 1A is moved from the first position to the second position. The second region is in contact with the cutting region by the movement of the punch, and the cutting region may be cut by the second region.

After the electrode plate is cut, the punch 520 may be moved back from the second position to the first position by an elastic member 750, and the next electrode plates may be cut by repeating the steps.

The method for notching an electrode plate CP is performed by the notching mold 10 . Thus, the cutting region of a plurality of electrode plates may be uniform. Thus, the alignment of a plurality of electrode plates may be improved. Thus, it is possible to prevent the positive electrode and the negative electrode of the secondary battery from being short-circuited due to misalignment. Thus, the secondary battery to which the method for notching an electrode plate is applied may have improved safety and reliability.

The notching mold 10 includes the punch 520 for cutting the electrode plate CP.

The punch 520 moves in the vertical direction. The punch 520 is inserted into the opening OP of the die 420 at a position before or after the movement. That is, the punch 520 may move in the vertical direction as it is inserted into the opening OP.

The punch 520 is moved by the movement of the upper plate 120. The movement of the punch 520 and the upper plate 120 is guided by different guides (e.g., posts). The punch 520 is guided by the guide post 700. The upper plate 120 is guided by a main post 200. The alignment of the punch 520 does not interfere with the alignment of the upper plate 120. Therefore, the clearance of the punch 520 may be maintained in a predetermined range.

The punch 520 is coupled to the punch plate 510 and is moved by the punch pusher 530. The upper plate 120 may be misaligned due to wear of the main post 200. However, the punch 520 is moved by the punch plate 510 and the punch pusher 530. Accordingly, the alignment of the punch 520 is not affected by the alignment of the upper plate 120. That is, the punch 520 is moved by the movement of the upper plate 120, but the alignment of the punch 520 is not affected by the alignment of the upper plate 120. Accordingly, the clearance of the punch 520 may be maintained in a predetermined range.

Thus, the notching mold 10 may have improved clearance. The notching mold 10 may maintain improved clearance even when repeatedly used. Therefore, the accuracy of cutting of the electrode plate CP cut by the notching mold 10 may be improved.

The notching mold 10 may be used when notching the electrode plate CP of the secondary battery. Therefore, a plurality of electrode plates CP may be cut to a uniform size. That is, the deviation of the cutting region of the electrode plates CP is reduced. Therefore, the alignment of the electrode plates CP may be improved. Accordingly, short circuiting between the positive and negative electrodes may be prevented. Therefore, the safety and reliability of the secondary battery may be improved.

The notching mold 10 may be used to punch out the electrode plate CP of an electrode assembly. The notching mold 10 may be used to punch out the negative electrode plate and positive electrode plate of the secondary battery.

FIGS. 6 to 8 are secondary batteries of various geometries manufactured using the notching mold.

Referring to FIG 6, the secondary battery 1000 may include a pouchshaped case 1100 and an electrode assembly 1300 accommodated in the case 1100.

The electrode assembly 1300 may be connected to an external terminal through an electrode tab 1400 and a lead 1500. An insulating layer 1600 may be disposed on the lead 1500 for insulation from the case 1100.

The electrode assembly 1300 may include a first electrode 1310, a second electrode 1320, and a separator 1330. The first electrode 1310 may be a negative electrode, and the second electrode 1320 may be a positive electrode. The first electrode 1310 and the second electrode 1320 may each include a current collector and an active material layer on the current collector. The current collector may be notched by the notching mold. Accordingly, a plurality of electrode tabs may be formed.

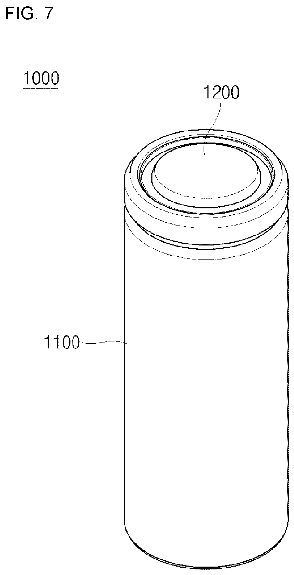

Referring to FIG. 7, the secondary battery 1000 may include a cylindrical case 1100 and a cap plate 1200 that seals the case 1100. That is, the secondary battery may be a cylindrical secondary battery. The electrode assembly may be accommodated in the case 1100.

The electrode assembly may be electrically connected to the case 1100 and the cap plate 1200. For example, the electrode assembly may be connected to the case 1100 through at least one of the electrode tabs or the leads. The electrode assembly may be connected to the cap plate 1200 through at least one of the electrode tabs or the leads.

The electrode assembly may include a negative electrode plate, a positive electrode plate, and a separator. The negative electrode plate and the positive electrode plate may each include the current collector. The current collector may be notched by the notching mold. Accordingly, a plurality of electrode tabs may be formed.

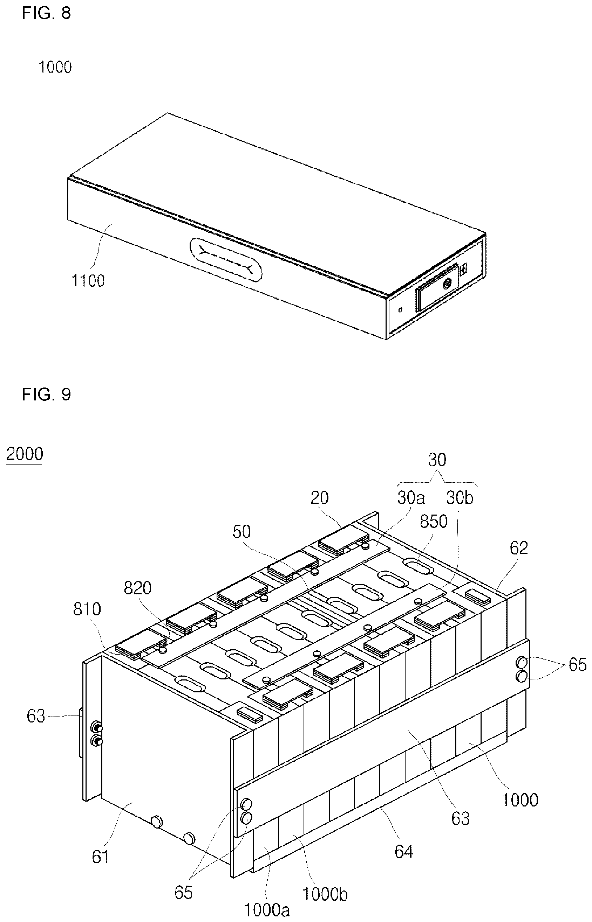

Referring to FIG. 8, the secondary battery may include a prismatic case 1100 and the electrode assembly disposed in the case. The electrode assembly may be connected to the terminal portion through at least one of the electrode tabs or the leads. The terminal may be connected to the external terminal.

The electrode assembly may include the negative electrode plate, the positive electrode plate, and the separator. The negative electrode plate and the positive electrode plate may each include the current collector. The collector may be notched by the notching mold. Accordingly, a plurality of electrode tabs may be formed.

The secondary battery may be used in portable small electronic devices such as smartphones, feature phones, notebook computers, digital cameras, and camcorders. A battery module and a battery pack including a plurality of secondary batteries may be used as a power source for driving a motor of a hybrid vehicle or an electric vehicle and a battery for storing power.

The battery module including secondary batteries is described with reference to FIG. 9.

Referring to FIG. 9, the battery module 2000 includes terminal parts 810 and 820, a plurality of secondary batteries 1000 arranged in one direction, a connection tab 20 connecting a secondary battery 1000a to an adjacent secondary battery 1000b, and a protection circuit module 30 having one end connected to the connection tab 20. The protection circuit module 30 may include a battery management system (BMS). The connection tab 20 may include a body portion in contact with the terminal parts between the adjacent secondary battery 1000a and 1000b and an extension portion extending from the body portion and connected to the protection circuit module 30. The connection tab 20 may be, for example, a bus bar.

Each secondary battery 1000 may include a battery case, an electrode assembly received (or accommodated) in the battery case, and an electrolyte. The electrode assembly and the electrolyte react electrochemically to store and release (e.g., generate) energy. Terminal parts 810 and 820 electrically connected to the connection tab 20 and a vent 850 as a discharge passage for gas generated inside the battery case may be provided on one side of (e.g., an upper side of) the secondary battery 1000. The terminal parts 810 and 820 of the secondary battery 1000 may be a positive electrode terminal 810 and a negative electrode terminal 820 having different polarities from each other, and the terminal parts 810 and 820 of the adjacent secondary battery 1000a and 1000b may be electrically connected to each other in series or parallel by the connection tab 20. Although a serial connection has been described as an example, the connection structure is not limited thereto, and various connection structures may be employed as desired or necessary. The number and arrangement of secondary battery is not limited to the structure shown in FIG. 9 and may be changed as desired or necessary.

The plurality of secondary batteries 1000 may be arranged in (e.g., may be stacked in) one direction so that the wide surfaces of the secondary batteries 1000 face each other, and the plurality of secondary batteries 1000 may be fixed by the housings 61, 62, 63, and 64. The housings 61, 62, 63, and 64 may include a pair of end plates 61 and 62 facing the wide surfaces of the secondary battery batteries 1000 and a side plate 63 and a bottom plate 64 connecting the pair of end plates 61 and 62 to each other. The side plate 63 may support side surfaces of the secondary batteries 1000, and the bottom plate 64 may support bottom surfaces of the secondary batteries 1000. The pair of end plates 61 and 62, the side plate 63 and the bottom plate 64 may be connected by bolts 65 and/or any other suitable fastening members and methods known to those of ordinary skill in the art.

The protection circuit module 30 may have electronic components and protection circuits mounted thereon and may be electrically connected to connection tabs 20. The protection circuit module 30 includes a first protection circuit module 30a and a second protection circuit module 30b extending along the direction in which the plurality of secondary batteries 1000 are arranged in different locations. The first protection circuit module 30a and the second protection circuit module 30b may be spaced from each other at a suitable or desired interval (e.g., a predetermined interval) and arranged parallel to each other to be electrically connected to adjacent connection tabs 20, respectively. For example, the first protection circuit module 30a extends on one side of the upper portion of the plurality of secondary batteries 1000 along the direction in which the plurality of secondary batteries 1000 are arranged, and the second protection circuit module 30b extends to the other upper side of the plurality of secondary batteries 1000 along the direction in which the plurality of secondary batteries 1000 are arranged. The second protection circuit module 30b may be spaced from the first protection circuit module 30a at a suitable or desired interval (e.g., a predetermined interval) with the vents 850 interposed therebetween but may be disposed parallel to the first protection circuit module 30a. As such, the two protection circuit modules are spaced from each other side-by-side along the direction in which the plurality of secondary batteries 1000 are arranged, thereby reducing or minimizing the area of the printed circuit board (PCB) constituting the protection circuit module. By separately configuring the protection circuit module into two protection circuit modules, unnecessary PCB area can be reduced or minimized. The first protection circuit module 30a and the second protection circuit module 30b may be connected to each other by a conductive connection member 50. One side of the conductive connection member 50 is connected to the first protection circuit module 30a, and the other side thereof is connected to the second protection circuit module 30b so that the two protection circuit modules 30a and 30b can be electrically connected with each other.

The connection may be performed by any one of soldering, resistance welding, laser welding, projection welding and/or any other suitable connection methods known to those of ordinary skill in the art.

The connection member 50 may be or include, for example, an electric wire. The connection member 50 may be made of or include a material having elasticity or flexibility. Via the connecting member 50, it may be possible to check and manage whether the voltage, temperature, and/or current of the plurality of secondary battery 1000 are normal or within a desired range. For example, the information received by the first protection circuit module from connection tabs adjacent to the first protection circuit module, such as voltage, current, and/or temperature, and the information received from connection tabs adjacent to the second protection circuit module, such as voltage, current, and/or temperature, may be integrated and managed by the protection circuit module through the connection member 50.

When a secondary battery 1000 swells, shocks may be absorbed by the elasticity or flexibility of the connection member 50, thereby hindering or preventing the first and second protection circuit modules 30a and 30b from being damaged.

The geometry and structure of the connection member 50 is not limited to the shape and structure shown in FIG. 9.

Because the protection circuit module 30 is provided as the first and second protection circuit modules 30a and 30b, the area of the PCB constituting the protection circuit module can be reduced or minimized, and the space inside the battery module can be secured, which improves work efficiency by facilitating a fastening work for connecting the connection tab 20 and the protection circuit module 30 and repair work when an abnormality is detected in the battery module.

The secondary battery and battery modules may be used to manufacture the battery pack.

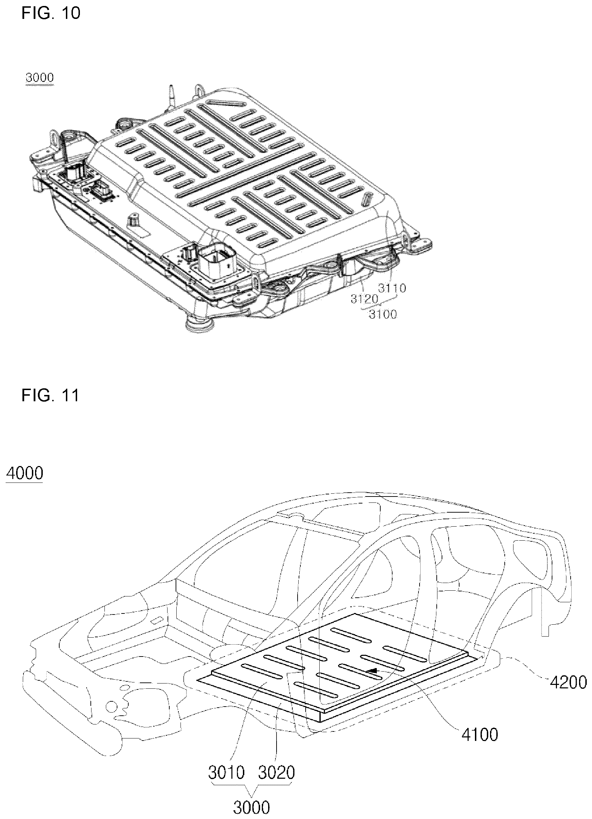

FIG. 10 shows a battery pack 3000. The battery pack 3000 may include a plurality of battery modules (not shown) and a housing 3100 for accommodating the plurality of battery modules. For example, the housing 3100 may include first and second housings 3110 and 3120 coupled in opposite directions through the plurality of battery modules. The plurality of battery modules may be electrically connected to each other by using a bus bar, and the plurality of battery modules may be electrically connected to each other in a series/parallel or series-parallel mixed method, thereby obtaining desired (e.g., required) electrical output. For convenience of illustration, parts such as bus bars, cooling units, and external terminals for electrical connection of secondary battery are omitted. In one or more example embodiments, battery pack 3000 may be mounted in a vehicle. The vehicle may be or include, for example, an electric vehicle, a hybrid vehicle, or a plug-in hybrid vehicle. A vehicle may include a four-wheeled vehicle or a two-wheeled vehicle.

In FIG. 11, a battery pack 3000 may include a battery pack cover 3010, which is a part of a vehicle underbody 4100 and may correspond to the first housing, and a pack frame 3020, which is disposed under the vehicle underbody 4100 and may corresponding to the second housing. The battery pack cover 3010 and the pack frame 3020 may be, e.g., integrated to a vehicle floor 4200. The vehicle underbody 4100 separates the inside and outside of a vehicle, and the pack frame 3020 may be disposed outside the vehicle.

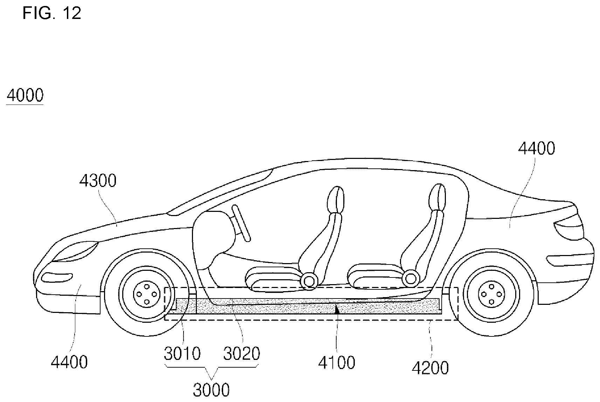

In FIG. 12, a vehicle 4000 may be formed by combining additional parts, such as a hood 4300 in front of the vehicle 4000 and fenders 4400 respectively located in the front and rear of the vehicle 4000 to a vehicle body part. The vehicle 4000 may include the battery pack 3000 including the battery pack cover 3010 and the pack frame 3020, and the battery pack 3000 may be coupled to the vehicle body part.

Although the present disclosure has been described above with respect to embodiments thereof, the present disclosure is not limited thereto. Various modifications and variations can be made thereto by those skilled in the art within the scope of the present disclosure as defined by the appended claims.

## Claims

1. A notching mold (10) comprising:
a lower plate (110);
an upper plate (120) disposed above the lower plate (110);
a die plate (410) disposed on the lower plate (110) and supporting a die (420);
the die (420);
a punch plate (510) between the upper plate (120) and the die plate (410);
a punch pusher (530) between the upper plate (120) and the die plate (410);
a punch (520) below the punch plate (510) and the punch pusher (530) and above the die plate (410); and
a guide post (700) connected to the die plate (410) and the punch (520),
wherein the die (420) comprises an opening (OP),
wherein the punch (520) is coupled with the punch plate (510),
wherein the punch (520) comprises a first region (1A) configured to be inserted into the opening (OP) and a second region (2A) disposed outside the opening (OP), and
wherein the guide post (700) is configured to guide movement of the punch (520).

2. The notching mold (10) as claimed in claim 1,
wherein a number of the guide post (700) disposed in one punch (520) is 1 to 4, and/or
wherein the notching mold (10) further comprises an elastic member (750) coupled to the guide post (700).

3. The notching mold (10) as claimed in claim 1 or 2, further comprising:
a stripper (600) disposed between the lower plate (110) and the upper plate (120);
a main post (200) connected to the lower plate (110) and the upper plate (120); and
an inner post (300) connected to the stripper (600) and the die plate (410).

4. The notching mold (10) as claimed in claim 3,
wherein the main post (200) is configured to guide movement of the upper plate (120), and/or
wherein the inner post (300) is configured to guide movement of the stripper (600).

5. The notching mold (10) as claimed in any one of the preceding claims, wherein the punch pusher (530) is connected to the punch plate (510) and the upper plate (120).

6. The notching mold (10) as claimed in any one of the preceding claims, wherein upon the upper plate (120) moving downward, the punch pusher (530) is configured to move downward, and the punch plate (510) and the punch (520) move downward via the punch pusher (530).

7. The notching mold (10) as claimed in any one of the preceding claims, wherein the second region (2A) overlaps a portion of an electrode plate (CP) configured to be placed on the die (420).

8. A method for notching an electrode plate (CP) using a notching mold (10), comprising:
disposing an electrode plate (CP) on a die (420), the die (420) comprising an opening (OP);
moving a punch (520); and
cutting the electrode plate (CP) by the punch (520),
wherein the punch (520) is driven by movement of an upper plate (120), and
wherein the movement of the upper plate (120) and movement of the punch (520) are guided by different posts (200, 300, 700).

9. The method as claimed in claim 8,
wherein a lower plate (110) is disposed below the upper plate (120),
wherein the die (420) is supported by a die plate (410) disposed on the lower plate (110),
wherein the upper plate (120) is guided by a main post (200) connected to the lower plate (110) and the upper plate (120), and
wherein the punch (520) is guided by a guide post (700) connected to the die plate (410) and the punch (520).

10. The method as claimed in claim 9,
wherein the electrode plate (CP) comprises a cutting region overlapping the opening (OP); and/or
wherein the punch (520) moves downward from a first position; and/or
wherein a portion of the punch (520) moves into the opening (OP).

11. The method as claimed in claim 10, wherein the punch (520) comprises a first region (1A) positioned to be inserted into the opening (OP) and a second region (2A) positioned outside the opening (OP), wherein the second region (2A) optionally overlaps the cutting region.

12. The method as claimed in claim 11, wherein the punch (520) moves to a second position, and wherein the cutting region is cut when the second region (2A) and the cutting region come into contact by the movement of the punch (520).

13. The method as claimed in claim 12, wherein a distance between an end of the punch (520) proximate to the die (420) and the die (420) at the second position is 0 µm to 2 µm when the punch is at the second position.

14. The method as claimed in claim 12 or 13, further comprising an elastic member (750) coupled to the guide post (700) for guiding the punch, wherein the punch (520) does not contact the elastic member (750) at the first position, and wherein the punch (520) contacts the elastic member (750) at the second position.

15. The method as claimed in claim 14, wherein the punch (520) moves from the second position to the first position via restorative force of the elastic member (750).
